(19) Europäisches Patentamt
European Patent Office
Office européen des brevets

(11) Publication number: **0 102 219**
**A2**

# (12) EUROPEAN PATENT APPLICATION

(21) Application number: 83304753.3

(22) Date of filing: 17.08.83

(51) Int. Cl.³: G 05 B 19/407

(30) Priority: 19.08.82 JP 143691/82

(43) Date of publication of application:
07.03.84 Bulletin 84/10

(84) Designated Contracting States:
DE FR GB

(71) Applicant: FANUC LTD
5-1, Asahigaoka 3-chome Hino-shi
Tokyo 191(JP)

(72) Inventor: Nozawa, Ryoichiro
12-1-2105, Sarugaku-cho
Shibuya-ku Tokyo 150(JP)

(72) Inventor: Kawamura, Hideaki
1375-5, Narahara-cho, Hachioji-shi
Tokyo 193(JP)

(72) Inventor: Miyata, Mitsuto
1768-149, Yugi, Hachioji-shi
Tokyo 192(JP)

(74) Representative: Billington, Lawrence Emlyn et al,
HASELTINE LAKE & CO Hazlitt House 28 Southampton
Buildings Chancery Lane
London WC2A 1AT(GB)

## (54) Acceleration/deceleration device for numerical controller.

(57) An acceleration/deceleration device for a numerical controller is provided with interpolating means for periodically obtaining a minute displacement in each axis from a separately calculated minute displacement in a tangential direction. The acceleration or deceleration is carried out for a minute displacement after interpolation. Delays are successively stored in the form of interpolated minute segments and a minute displacement in a tangential direction separately calculated from a delay in the tangential direction is proportionally distributed for each minute section, thereby to obtain an output minute displacement in each axis.

EP 0 102 219 A2

# ACCELERATION/DECELERATION DEVICE FOR NUMERICAL CONTROLLER

The present invention relates to an acceleration/deceleration device for a numerical controller.

Conventional acceleration/deceleration devices of this kind are roughly classified into those of the type that performs acceleration or deceleration while varying the feed rate which is provided to interpolating means, and those of the type that performs acceleration or deceleration for each axis while manipulating a minute displacement from the interpolating means in consideration of the overall delay.

With the latter system, since acceleration or deceleration takes place entirely independently of interpolation, it is sufficient for the start and stop of a workpiece or cutter only to start and stop the interpolation without regard to acceleration or deceleration and, accordingly, this system is advantageous in that the interpolating means is simple-structured, but is defective in that an error is caused in the path of the cutter after acceleration or deceleration because of a delay for each axis.

In contrast thereto, the former system is entirely free from the fear of an error in the path of the cutter being caused by acceleration or deceleration, but in order to stop deceleration accurately at the end of given movement of the workpiece or cutter, it is necessary to detect at all times the distance necessary for deceleration corresponding to ever-changing moving speed of the workpiece or cutter and the distance from its position to the end of its movement; therefore, complex calculations are involved and a complicated acceleration/deceleration device is needed therefor. Further, in the case of additionally providing a function of calculating the position of the workpiece or cutter in each axis after interpolation to check whether the workpiece or cutter is within a limit range of movement, the latter system is capable of decelerating and stopping the workpiece or cutter within the range of its movement through utilization of a delay just corresponding to the distance of deceleration which exists between the positions of the workpiece or cutter after interpolation and after acceleration or deceleration. On the other hand, the former system has no such delay, and hence possesses the drawback that it cannot decelerate and stop the workpiece or cutter within the range of its movement.

An embodiment of the present invention can provide an acceleration/deceleration device for a numerical controller which permits simplification of the arrangement of interpolating means and is capable of deceleration and stopping of a workpiece or cutter within a given limit range of its movement.

An embodiment of the present invention can provide an acceleration/deceleration device for a numerical controller in which an error in the path of a cutter by acceleration or deceleration is very small.

An acceleration/deceleration device embodying the present invention is provided with minute displacement storage means for successively storing minute displacements in each axis-direction and in a tangential direction interpolated by interpolating means for periodically obtaining minute displacements in each axis-direction from separately calculated minute displacements in the tangential direction, tangential minute output displacement computing means for computing a minute output displacement SO in the tangential direction by performing acceleration or deceleration on the basis of the minute displacement in the tangential direction through the use of a predetermined acceleration/deceleration algorithm, and output means for successively taking out the minute displacements in each axis-direction from the minute displacement storage means and distributing to each axis the minute displacement in each axis-direction in accordance with the ratio between the corresponding minute displacement in the tangential direction stored in the minute displacement storage means and the minute output displacement SO computed by the tangential minute displacement computing means.

The abovesaid output means comprises output-constant specifying means for specifying minute displacements for output among the minute displacements in each axis-direction and in the tangential direction stored in the minute displacement storage means, specifying the specified minute displacements as proportional constants for computing minute output displacements and modifying the minute displacements for output and the proportional constants to the minute displacements input immediately after them when the minute output displacement SO is not equal to zero but the specified tangential minute displacement for output is zero, first output means which is selected when the tangential minute displacement for output is smaller than the minute output displacement SO, for outputting to the respective axes all the minute displacements for output, and second output means which is selected when the tangential minute displacement for output is larger than the minute output displacement SO, for distributing and outputting to the each axis-directions the minute displacement for output stored in the minute displacement storage means in accordance with the ratio between the corresponding minute displacement in the tangential direction and the minute output displacement SO and for updating the minute displacement for output with the minute displacement thus output.

An embodiment of the present invention can provide an acceleration/deceleration controller for a numerical control device that is provided with interpolating means for periodically obtaining a minute displacement of a workpiece or tool in each axis from a separately calculated minute displacement thereof in a tangential direction.

Reference is made , by way of example, to the accompanying drawings, in which:

Fig. 1 is a block diagram illustrating the arrangement of an acceleration/deceleration device embodying the present invention;

Fig.2 is a diagram explanatory of the operation of an embodiment of the present invention;

Fig. 3 is a block diagram illustrating an example of hardware which can constitute an acceleration/deceleration device embodying the present invention ; and

Figs. 4 through 6 show an example of a flowchart of an acceleration/deceleration routine which is carried out by an acceleration/deceleration device embodying the present invention.

In Fig. 1, interpolating means 1 is to obtain minute displacements $\Delta X$ and $\Delta Y$ in respective axes from a minute displacement $\Delta S$ in a tangential direction calculated by feed rate control means (not shown). The arrangement of the interpolating means 1 is well-known.

Tangential-direction minute output displacement computing means 2 is to compute a minute output displacement SO in the tangential direction by performing acceleration or deceleration on the basis of the minute displacement $\Delta S$ in the tangential direction.

Minute displacement atorage means 3 is to store the minute displacements $\Delta X$ and $\Delta Y$ from the interpolating means 1 and the minute displacement $\Delta S$ in the order of output. For example, in the case of interpolating a circular arc OP shown in Fig. 2, if the minute displacements are output in an order $(\Delta X_1, \Delta Y_1)$ - $(\Delta X_2, \Delta Y_2)$ - $(\Delta X_3, \Delta Y_3)$, then they are stored in the order of output as depicted in Fig. 1 and, at the same time, the corresponding minute displacements $\Delta S_1$, $\Delta S_2$ and $\Delta S_3$ in the tangential direction are also stored. Incidentally, the minute displacements $\Delta S_1$ to $\Delta S_3$ may be obtained from the minute displacements $\Delta X_1$ to $\Delta X_3$ and $\Delta Y_1$ to $\Delta Y_3$, or the input to the interpolating means 1 may also be used.

Output-constant specifying means 4 specifies those of the minute displacements in the respective axes and in the tangential direction stored in the minute displacement storage means 3 which are to be taken out as outputs, and it specifies the specified minute displacements for output as proportional constants for computing minute output displacements in the respective axes. In this case, when the tangential minute output displacement SO is not zero but the tangential minute displacement for output is zero, the specified minute displacements for output and the proportional constants are replaced with those immediately following them.

First output means 5 is to provide to position control circuits (not shown) in the respective axes all the minute displacements for output in the respective axes which are stored in the minute displacement storage means 3. The values of all the output minute displacements for output become zero.

Second output means 6 computes the minute displacement for output in each axis stored in the minute displacement storage means 3 in accordance with the ratio between the corresponding tangential minute displacement and the proportional constant, and provides the computed minute displacement to the corresponding position control circuit and, further, it subtracts the output displacement from the minute displacement for output in each axis.

Switching means 7 receives the tangential minute displacement for output ΔS (OUT) from the minute displacement storage means 3 and the tangential minute output displacement SO and, for each cycle of acceleration or deceleration control, it performs predetermined status decisions in such a sequence as follows:

(1) Decision as to whether SO = 0

(2) Decision as to whether $\Delta S$ (OUT) = 0

(3) Decision as to whether $\Delta S$ (OUT) > SO

In the decision (1):

If SO = 0, the current cycle is brought to an end.

If SO $\neq$ 0, the decision (2) is made.

In the decision (2):

If $\Delta S$ (OUT) = 0, the output-constant specifying means 4 is driven to make the decision (3).

If $\Delta S$ (OUT) $\neq$ 0, the decision (2) is made.

In the decision (3):

If $\Delta S$ (OUT) > SO, the second output means 6 is driven to put an end to the current cycle.

If $\Delta S$ (OUT) < SO, the first output means 5 is drive and then the operation is returned to the procedure of the condition $\Delta S$ (OUT) = 0.

The operation of the present invention will hereinafter be described in connection with the interpolation oi the circular arc OP shown in Fig. 2.

The minute displacements $\Delta X_1$, $\Delta Y_1$ and $\Delta S_1$ in the X and the Y axis and in the tangential direction by a first interpolation are stored in the storage means 3, and they are specified as the minute displacements for output and as the proportional constants. Further, a minute output displacement $SO_1$ in the tangential direction is computed by the tangential minute output displacement computing means in accordance with an existing acceleration/deceleration algorithm. Now, assuming that the rate of acceleration/deceleration is selected to be k percent (for example, 20%) of a delay ERR, then the minute output displacement $SO_1$ in the tangential direction has a length equal to k percent of the minute displacement $\Delta S_1$ in the tangential direction as shown in Fig. 2.

In the first cycle, $SO_1 \neq 0$, $\Delta S_1 \neq 0$ and $\Delta S_1 > SO_1$, so that the second output means 6 is selected, which obtains minute displacements for output $WX_1$ and $WY_2$ in the X and the Y axis according to the following equations and provides them to the X-axis and the Y-axis position control circuit, respectively.

$$WX_1 = SO_1 \times \frac{KX}{KS}$$

$$WY_1 = SO_1 \times \frac{KX}{KS}$$

where KX is a proportional constant for the X axis, which has a value equal to $\Delta X_1$, and KY is a proportional constant for the Y axis, which has a value equal to $\Delta Y_1$. That is, as shown in Fig. 2, the minute displacements for output $WX_1$ and $WY_1$, which correspond to k percent of the minute displacements $\Delta X_1$ and $\Delta Y_1$ obtained by the first interporation, respectively, are output for the respective axes.

Further, $WX_1$, $WY_1$ and $SO_1$ thus output are subtracted from the minute displacements for output $\Delta X_1$, $\Delta Y_1$ and $\Delta S_1$, respectively, by which the minute displacements for outputs become such as indicated by $\Delta X_1'$, $\Delta Y_1'$ and $\Delta S_1'$ in Fig. 2.

In the next cycle, minute displacements $\Delta X_2$, $\Delta Y_2$ and $\Delta S_2$ in the X and the Y axis and in the tangential direction, obtained by a second interpolation, are stored in the storage means 3. Accodingly, the overall delay ERR becomes such indicated by $ERR_2$ in Fig. 2, so that $SO_2$, which is k percent of the delay $ERR_2$, is output from the tangential minute displacement computing means 2. Also in this cycle, $SO_2 \neq 0$, $\Delta S_1' \neq 0$ and $\Delta S_1' > SO_2$, so that the second output means 6 is selected, from which $WX_2$ and $WY_2$ are provided to the X and the Y axis and the minute displacements for output are changed to $\Delta X_1''$, $\Delta Y_1''$ and $\Delta S_1''$.

In the next cycle, the minute displacements $\Delta X_3$, $\Delta Y_3$ and $\Delta S_3$ in the X-axis, Y-axis and tangential directions by a third interpolation are stored in the storage means 3. Accordingly, the overall delay is such as indicated by $ERR_3$ in Fig. 2 and $SO_3$ which is k percent of the delay is output from the computing means 2. In this cycle, since $\Delta S_1'' < SO_3$, the first output means 5 is selected first to provide therefrom $WX_3'$ (= $\Delta X_1''$) and $WY_3'$ (= $\Delta Y_1''$) to the X and Y axes, respectively. Further, $WS_3$ (= $\Delta S_1''$)

corresponding to the abovesaid $WX_3$ and $WY_3$ is subtracted from $SO_3$. Then the output-constant specifying means 4 is started, by which $\Delta X_2$, $\Delta Y_2$ and $\Delta S_2$ are specified as new minute displacements and proportional constants. Consequently, the condition $\Delta S_2 > \Delta SO_3 (SO_3')$ holds and the second output means 6 is selected, from which $WX_3$" and $WY_3$" corresponding to $SO_3''(SO_3')(= SO_3 - WS_3)$ are provided to the X and Y axes, respectively. And the minute displacements for output are altered to $\Delta X_2'$, $\Delta Y_2'$ and $\Delta S_2'$. Also in the subsequent cycles, the same operation as described above is repeated to carry out predetermi ned acceleration/deceleration control.

As described above, according to the present invention, since the minute displacement after interpolation is distributed to each axis in accordance with the inclination of the direction of the displacement to the X or Y axis, an error in the path of a cutter is appreciably reduced. According to the conventional acceleration/deceleration or deceleration for each axis while manipulating the minute displacement from the interpolating means in view of the overall delay, k percent, $kERR_2$, of the delay ERR is distributed to each of the X and Y axes, for example, in the second cycle and, in the third cycle, k percent, $kERR_3'$ of the delay $ERR_3'$ is distributed to each of the X and Y axes, resulting in the path of the cutter greatly deviating from the circular arc inwardly thereof as will be seen from Fig. 2. But the present invention is entirely free from such a defect.

While the foregoing description has been given in respect of two-axis control of the X and Y axes, it is a matter of course that axis control of three or more axes can similarly be accomplished.

Fig. 3 illustrates in block form an example of hardware which constitutes the acceleration/deceleration device of the present invention. Numerical information necessary for numerical control including acceleration/deceleration control is read out from a tape reader 33 or external memory 35 and is stored in a memory 36. In the memory 36 are stored various programs necessary for numerical control, for example, an interpolation routine, an acceleration/deceleration routine, a position control routine and so forth, and a microprocessor 30 executes predetermined numerical control in accordance with such routines.

Figs. 4 through 6 show a flowchart of an example of the acceleration/deceleration control routine that is carried out by an acceleration/deceleration device embodying the present invention. The meanings of symbols in Figs. 4 to 6 are as follows:

XI: Input minute displacement in the X-axis direction

YI: Input minute displacement in the Y-axis direction

ZI: Input minute displacement in the Z-axis direction

SI: Input minute displacement in the tangential direction

XO: Output minute displacement in the X-axis direction

YO: Output minute displacement in the Y-axis direction

ZO: Output minute displacement in the Z-axis direction

SO: Output minute displacement in the tangential direction

QX(n): Queuing for XI

QY(n): Queuing for YI

QZ(n): Queuing for ZI

QS(n): Queuing for SI (n = 1 ∿ QMAX)

IN: Input position index for queuing

OUT: Output position index for queuing

QMAX: Number of locations of queuing

ERR: Delay for acceleration/deceleration for SI

KX: Constant for proportional calculation (component in the X-axis direction)

KY: Constant for proportional calculation (constant in the Y-axis direction)

KZ: Constant for proportional calculation (component in the Z-axis direction)

KS: Constant for proportional calculation (component in the tangential direction)

In Figs. 4 through 6, step P1 is to calculate the input minute displacement SI in the tangential direction, steps P3 to P5 are to advance the queuing input index IN by one, and step P6 is to load each input minute displacement in the queuing. This input minute displacement is stored in the memory 36. Steps P1 to P6 implement the minute displacement storage means 3.

Steps P7 to P9 perform acceleration or deceleration with SI delayed to obtain SO, thereby obtaining new delay ERR. These steps implement the tangential minute output displacement computing means 2. SO and ERR are stored in the memory 36.

Step P10 is to initially clear the output displacement in each axis.

Steps P11, P12 and P17 are to implement the switching means 7.

Steps P13 to P15 perform an operation of advancing the queuing output index OUT by one, and step P16 carries out an operation of saving the contents of new queuing output positions as constants for proportional calculations. Steps P13 to P16 constitute the output-constant specifying means 4. Incidentally, the constants for proportional calculations are stored in the memory 36.

Steps P18 and P19 are to perform an operation of providing all the contents of the current queuing output positions to X-axis, Y-axis and Z-axis position control circuits 37, 38 and 39. These steps constitute the first output means 5.

Step P20 is to obtain, by a proportional calculation, an output displacement in each axis which is proportional to SO, step P21 is to apply the calculated results to the X-axis, Y-axis and Z-axis position control circuits 37, 38 and 39, and step P22 is to update the contents of the current queuing output positions with the abovesaid calculation results. These steps constitute the second output means 6.

As has been described in the foregoing, in an embodiment of the present invention, since acceleration or deceleration is carried out through using a predetermined acceleration/deceleration algorithm after interpolation, the interpolating means is simplified in construction and the workpiece or cutter can be decelerated and stopped without getting out of the limit range of its movement. Further, delays are successively stored in the form of interpolated minute segments and the minute displacement in the tangential direction separately calculated from a delay in the tangential direction is proportionally distributed for each minute section to obtain the output minut displacement in each axis, so that an error in the path of the cutter can be suppressed very small.

It will be apparent that many modifications and variations may be effected without departing from the scope of the novel concepts of the present invention.

CLAIMS

1. An acceleration/deceleration device for a numerical controller which is provided with interpolating means for periodically obtaining a minute displacement of a workpiece or cutter in each axis from a separately calculated minute displacement thereof in a tangential direction, comprising:

minute displacement storage means for successively storing minute displacements in each axis-direction and in a tangential direction interpolated by interpolating means for periodically obtaining minute displacements in each axis-direction from separately calculated minute displacements in the tangential direction;

tangential minute output displacement computing means for computing a minute output displacement SO in the tangential direction by performing acceleration or deceleration on the basis of the minute displacement in the tangential direction through the use of a predetermined acceleration/deceleration algorithm; and

output means for successively taking out the minute displacements in each axis-direction from the minute displacement storage means and distributing and outputting to each axis the minute displacement in each axis-direction in accordance with the ratio between the corresponding minute displacement in the tangential direction stored in the minute displacement storage means and the minute output displacement SO computed by the tangential minute displacement computing means.

2. An acceleration/deceleration device according to claim 1, wherein the output means comprisis:

output-constant specifying means for specifying minute displacements for output among the minute displacements in each axis-direction and in the tangential direction stored in the minute displacement sorage means, specifying the specified minute displacements as proportional constants for computing minute output displacements and modifying the minute displacements for output and the proportional constants to the minute displacements input immediately after them when the minute output displacement SO is not equal to zero but the specified tangential minute displacement for output is zero;

first output means which is selected when the tangential minute displacement for output is smaller than the minute output displacement SO, for outputting to the respecti axes all the minute displacements for output; and

second output means which is selected when the tangential minute displacement for output is larger than the minute output displacement SO, for distributing and outputting to the each axis-directions the minute displacemen for output stored in the minute displacement storage means in accordance with the ratio between the corresponding minute displacement in the tangental direction and the minute output displacement SO and for updating the minute displacement for output with the minute displacement thus output.

FIG.I

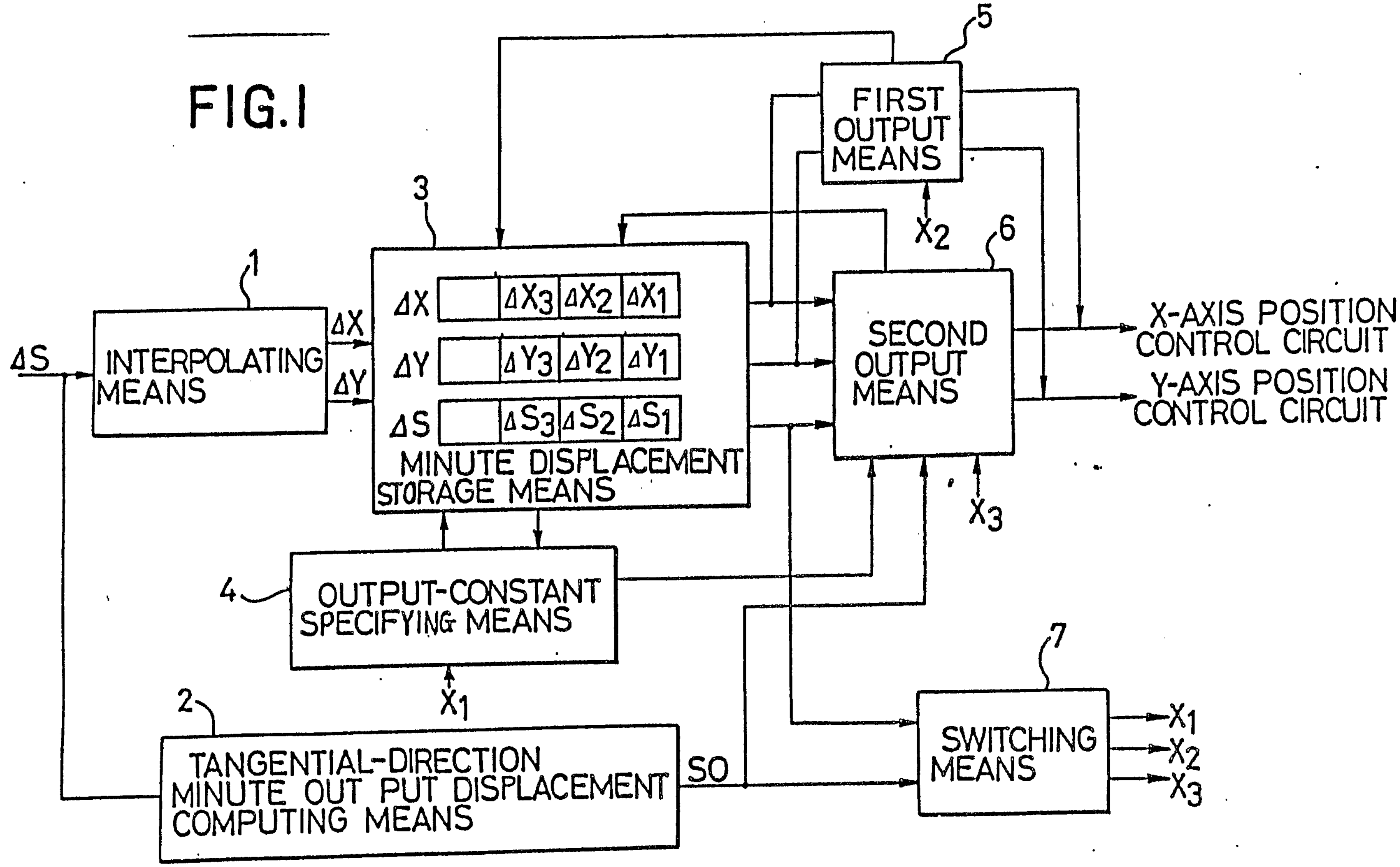
ΔS
INTERPOLATING MEANS
1
ΔX
ΔY
3
ΔX
ΔX3 ΔX2 ΔX1
ΔY
ΔY3 ΔY2 ΔY1
ΔS
ΔS3 ΔS2 ΔS1
MINUTE DISPLACEMENT STORAGE MEANS
4
OUTPUT-CONSTANT SPECIFYING MEANS
X1
2
TANGENTIAL-DIRECTION MINUTE OUT PUT DISPLACEMENT COMPUTING MEANS
SO
5
FIRST OUTPUT MEANS
X2
6
SECOND OUTPUT MEANS
X3
X-AXIS POSITION CONTROL CIRCUIT
Y-AXIS POSITION CONTROL CIRCUIT
7
SWITCHING MEANS
X1
X2
X3

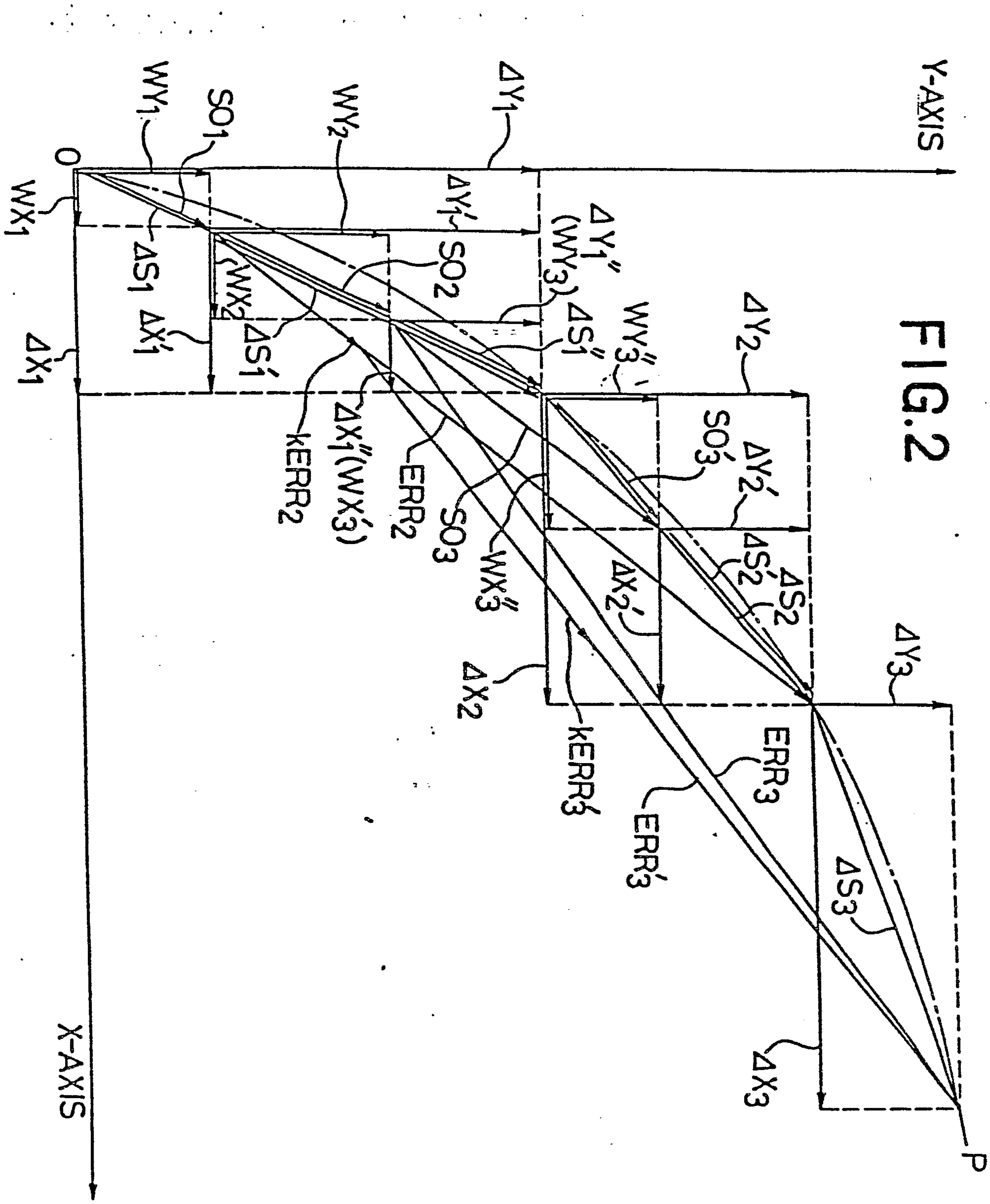

Y-AXIS
X-AXIS
0
P
WY1
SO1
WY2
ΔY1
WX1
ΔS1
ΔY'1
ΔY''1
(WY'3)
SO2
WX'2
ΔX'1
ΔS'1
ΔS''1
WY''3
ΔY2
ΔX1
kERR2
ΔX''1(WX'3)
ERR2
SO3
WX''3
SO'3
ΔY'2
ΔS'2
ΔS2
ΔX'2
ΔX2
kERR'3
ERR3
ERR'3
ΔY3
ΔS3
ΔX3


FIG.2

FIG.3

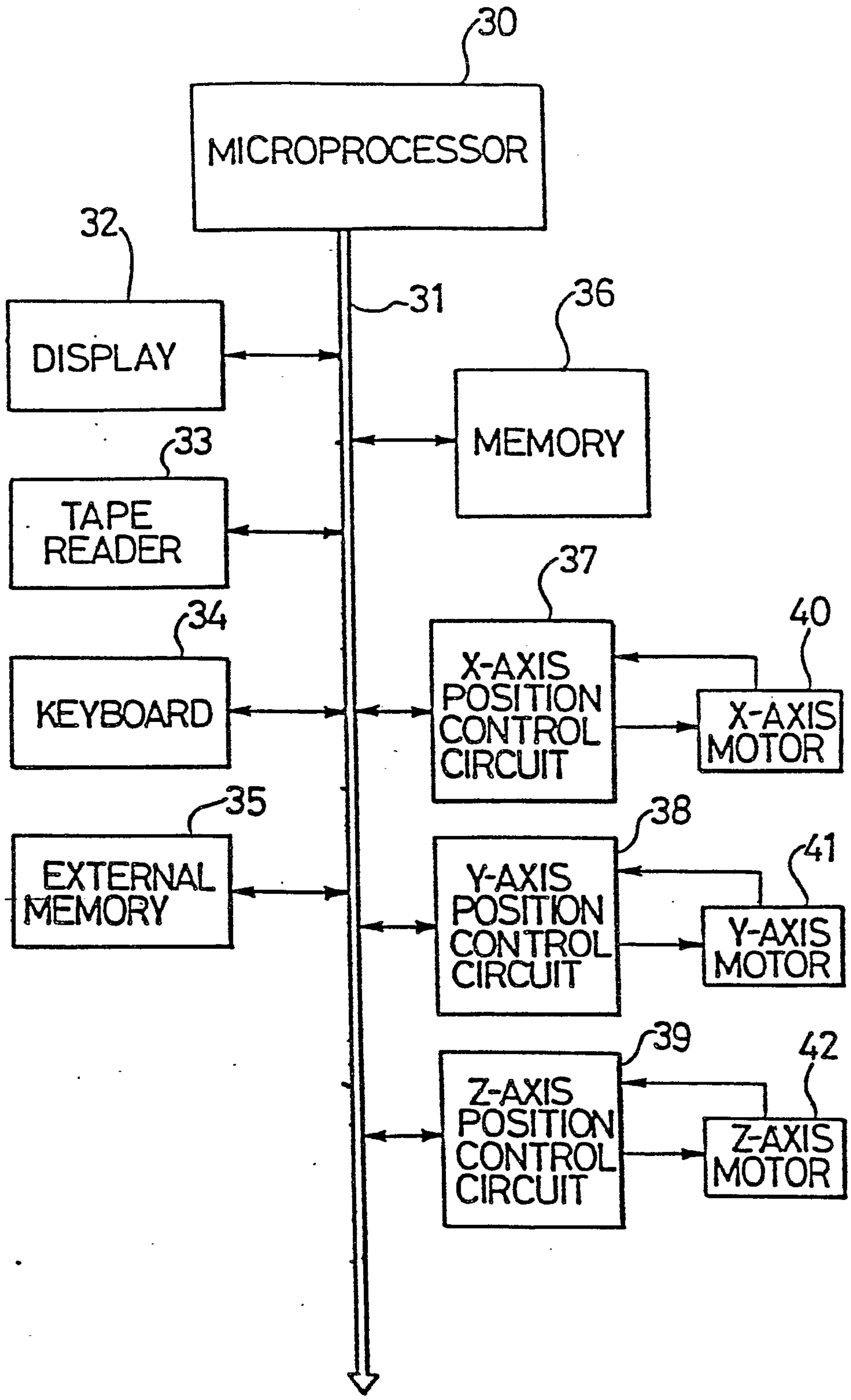
30
MICROPROCESSOR
32
DISPLAY
31
36
MEMORY
33
TAPE READER
34
KEYBOARD
37
X-AXIS POSITION CONTROL CIRCUIT
40
X-AXIS MOTOR
35
EXTERNAL MEMORY
38
Y-AXIS POSITION CONTROL CIRCUIT
41
Y-AXIS MOTOR
39
Z-AXIS POSITION CONTROL CIRCUIT
42
Z-AXIS MOTOR

FIG.4

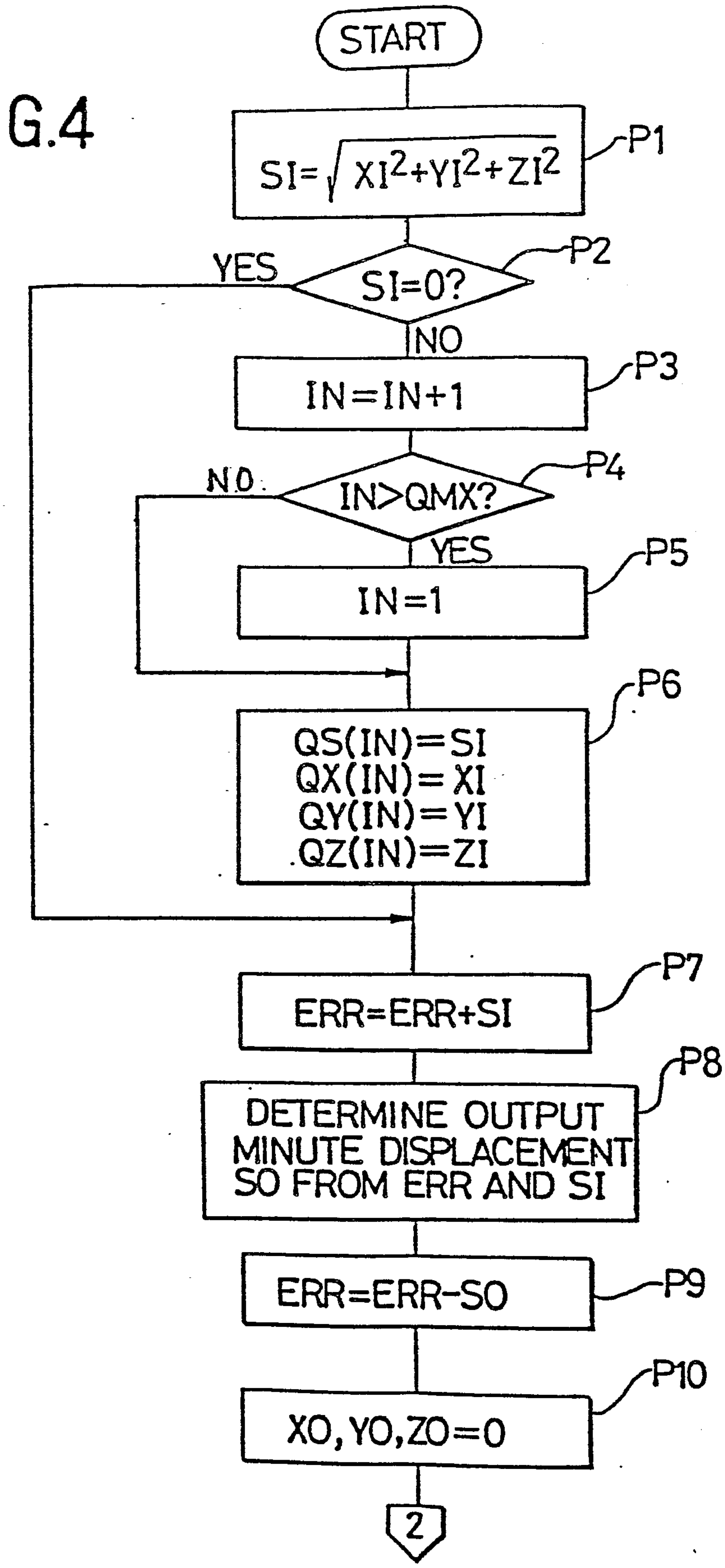
START
$SI=\sqrt{XI^2+YI^2+ZI^2}$
P1
SI=0?
P2
YES
NO
IN=IN+1
P3
IN>QMX?
P4
NO
YES
IN=1
P5
QS(IN)=SI
QX(IN)=XI
QY(IN)=YI
QZ(IN)=ZI
P6
ERR=ERR+SI
P7
DETERMINE OUTPUT MINUTE DISPLACEMENT SO FROM ERR AND SI
P8
ERR=ERR-SO
P9
XO,YO,ZO=0
P10
2

FIG.5

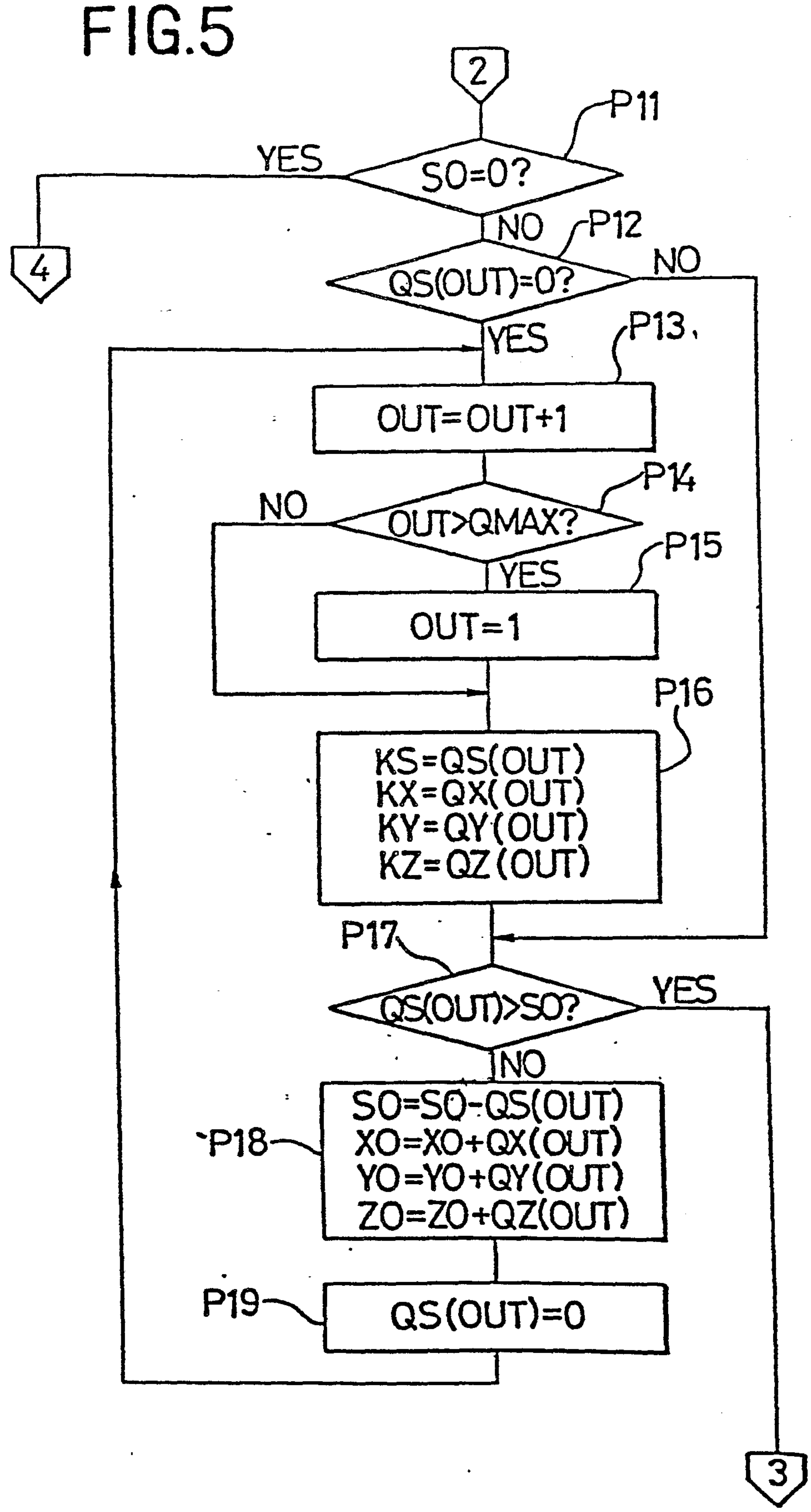

2
P11
SO=0?
YES
4
NO
P12
QS(OUT)=0?
NO
YES
P13
OUT=OUT+1
P14
NO
OUT>QMAX?
YES
P15
OUT=1
P16
KS=QS(OUT)
KX=QX(OUT)
KY=QY(OUT)
KZ=QZ(OUT)
P17
QS(OUT)>SO?
YES
NO
P18
SO=SO-QS(OUT)
XO=XO+QX(OUT)
YO=YO+QY(OUT)
ZO=ZO+QZ(OUT)
P19
QS(OUT)=0
3

FIG.6

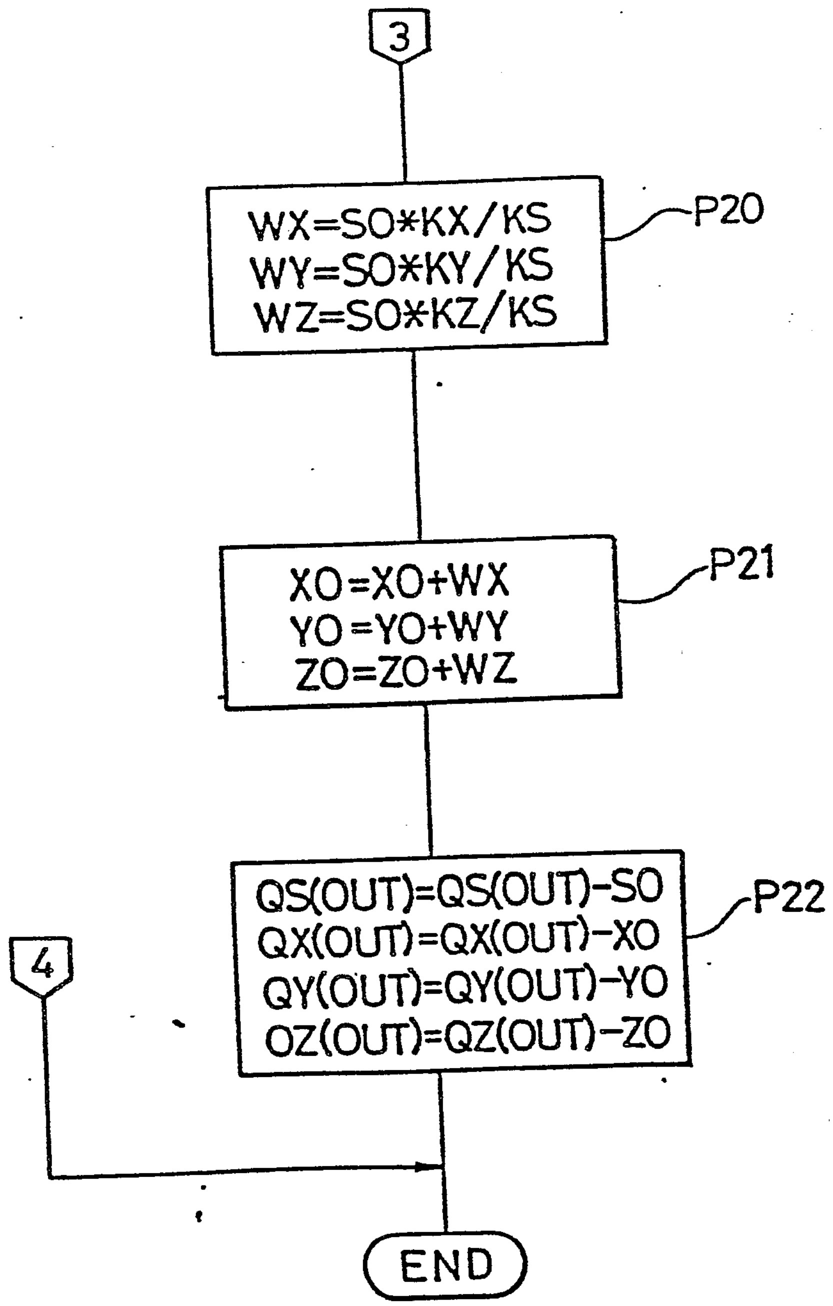
3
WX=SO*KX/KS
WY=SO*KY/KS
WZ=SO*KZ/KS
P20
XO=XO+WX
YO=YO+WY
ZO=ZO+WZ
P21
QS(OUT)=QS(OUT)-SO
QX(OUT)=QX(OUT)-XO
QY(OUT)=QY(OUT)-YO
OZ(OUT)=QZ(OUT)-ZO
P22
4
END